Europäisches Patentamt

(19) European Patent Office

Office européen des brevets

(11) Numéro de publication: **0 088 025 B1**

(12) **FASCICULE DE BREVET EUROPEEN**

(45) Date de publication du fascicule du brevet: 21.05.86

(51) Int. Cl.⁴: **B 65 G 65/46**, F 15 B 11/20

(21) Numéro de dépôt: 83400418.6

(22) Date de dépôt: 01.03.83

(54) Dispositif d'assistance au démarrage d'extracteur à vis équipant des cellules de stockage de produits pulvérulents ou granuleux.

(30) Priorité: 02.03.82 FR 8203655

(43) Date de publication de la demande:
07.09.83 Bulletin 83/36

(45) Mention de la délivrance du brevet:
21.05.86 Bulletin 86/21

(84) Etats contractants désignés:
AT BE CH DE GB IT LI LU NL SE

(56) Documents cités:
FR - A - 2 225 640
US - A - 3 391 809

(73) Titulaire: ETABLISSEMENTS MORILLON, Route de May-Andrèze, F-49600 Beaupreau (FR)

(72) Inventeur: Morillon, Théodore, 31, rue du Père-Allard Andrèze, F-49600 Beaupréau (FR)

(74) Mandataire: Phélip, Bruno et al, c/o Cabinet Harlé & Phélip 21, rue de la Rochefoucauld, F-75009 Paris (FR)

LIBER, STOCKHOLM 1986

## Description

La présente invention concerne les dispositifs d'extraction à vis équipant les cellules de stockage de produits pulvérulents ou granuleux.

Les dispositifs d'extraction actuellement utilisés pour les cellules à fond plat consistent généralement dans une vis de tansfert du type vis d'Archimède d'axe horizontal effectuant une rotation lente, continue ou séquentielle autour de l'axe vertical passant par le centre du silo: ces deux mouvements imprimés à la vis sont obtenus par un ou plusieurs moteurs électriques en liaison avec celle-ci au moyen d'organes mécaniques. Ces derniers sont généralement surdimensionnés en raison des sollicitations importantes auxquelles ils sont soumis. En particulier, le mouvement radial de la vis à vis très faible vitesse ne peut être obtenu que par un moteur couple associé à un réducteur très démultiplié. L'immobilisation de la vis dans la masse du produit crée un couple de démarrage élevé nécessitant une résistance mécanique élevée des organes en mouvement. Pour remédier à ces inconvénients, la demanderesse a conçu un dispositif faisant l'objet de la demande de brevet FR-A-2 479 161 et présentant les caractéristiques du préambule de la revendication indépendante. Ce dispositif permet d'assurer le démarrage de la vis d'extraction dans la masse du produit avec une puissance égale à la maitié de celle utilisée ordinairement en réduisant au maximum le nombre des organes de transmission, en utilisant pour le mouvement radial de la vis, une partie de l'énergie résiduelle du moteur d'entrainement en rotation de la vis sur elle-même. Ce dispositif comporte un moteur hydraulique directement accouplé avec la vis d'extraction et climenté par une centrale électro-hydraulique par l'intermédiaire d'un électro-distributeur permettant en dehors des périodes de fonctionnement du moteur de débiter sur un circuit faisant retour au bac, l'énergie résiduelle issue du moteur étant répartie entre un circuit retour vers la centrale et une canalisation d'alimentation d'un vérin hydraulique à double effet assurant à la vis une rotation angularie séquentielle autour de l'axe vertical du silo. Le dispositif comporte sur le circuit d'alimentation du vérin, en aval du moteur hydraulique, des moyens de réglage du débit et de la pression ainsi que sur le retour du vérin afin de contrôler la vitesse retour de la tige du vérin. Les mesures effectuées sur les appareils existants ont permis de constater que le couple nécessaire au démarrage de la vis était d'environ vingt fois supérieur au couple nécessaire au fonctionnement normal en cours d'extraction, la variation du couple de la phase démarrage à la phase fonctionnement normal s'effectuant généralement sur les deux premiers tours de rotation. L'obtention du couple de démarrage peut résulter soit d'un surdimensionnement du moteur hydraulique entrainant de ce fait celui de la pompe et du moteur électrique d'entrainement, soit d'un surdimensionnement relatif au moteur hydrauliqe assorti d'une pompe à deux débits. Ce procédé consiste alors à démarrer sous forte pression et faible débit donc à faible vitesse, la pompe passant après décollage à faible pression et fort débit, un tel procédé ayant pour avantage d'utiliser un moteur et des accessoires moins puissants: cependant le rapport entre le couple normal et le couple maximum, obtenu par un tel procédé n'est que de un à quatre ou cinq, le couple de démarrage s'avérant dans certains cas insuffisant.

Le dispositif, suivant l'invention, a pour but d'améliorer le démarrage de la vis d'extraction dans la masse même du produit en développant un couple de rotation important de la vis sur elle-même avec une pression relativement basse, permettant de réduire la puissance installée, l'ensemble de l'installation restant économique d'une utilisation sûre et rationelle.

Le dispositif, objet de l'invention, est constitué d'un vérin hydraulique à double effet dont la tige agit sur une roue à cliquet ou roue libre calée sur l'arbre d'entrainement en rotation de la vis sur elle-même, auquel est accouplé le moteur hydraulique d'entrainement. La roue libre transforme le mouvement de va et vient linéaire du vérin en un mouvement angulaire séquentiel, chaque course du dit vérin provoquant une rotation de la vis d'une valeur de n degrés. Ce vérin est alimenté au moment du démarrage par la pompe hydraulique à la suite de l'élévation de pression dans le réseau de canalisations reliant la dite pompe au moteur hydraulique d'entrainement en rotation de la vis sur elle-même, élévation de pression due à l'accroissement du couple résistant au démarrage de la vis dans la masse du produit. Cette alimentation du vérin est commandée par au moins un clapet taré monté sur le réseau de canalisations, lequel clapet canalise le fluide hydraulique à travers un distributeur commandant le mouvement alterné du vérin dont l'action réduit aussitôt la valeur du couple résistant et par suite la pression hydraulique dans le réseau. Dès l'obtention du couple normal de fonctionnement le vérin cesse d'agir, l'entrainement en rotation de la vis sur elle-même s'effectuant alors à l'aide du seul moteur hydraulique. Le dispositif est équipé d'accessoires permettant de contrôler la vitesse du vérin et la pression maximum de fonctionnement. Les dessins annexés illustrent, à titre d'exemple, un mode de réalisation du dispositif conforme à la présente invention. Ceux-ci représentent:

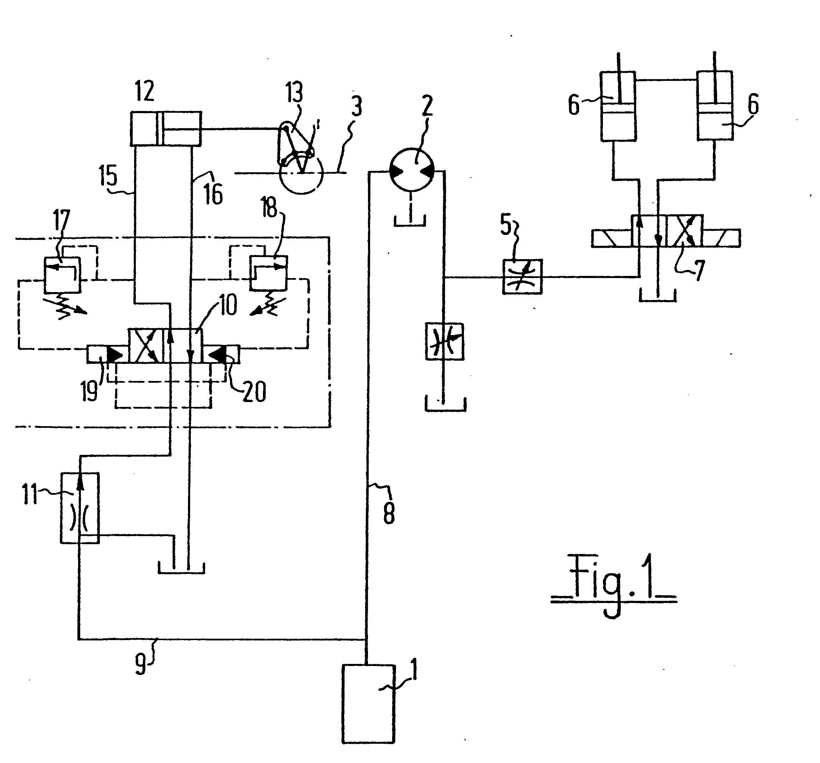

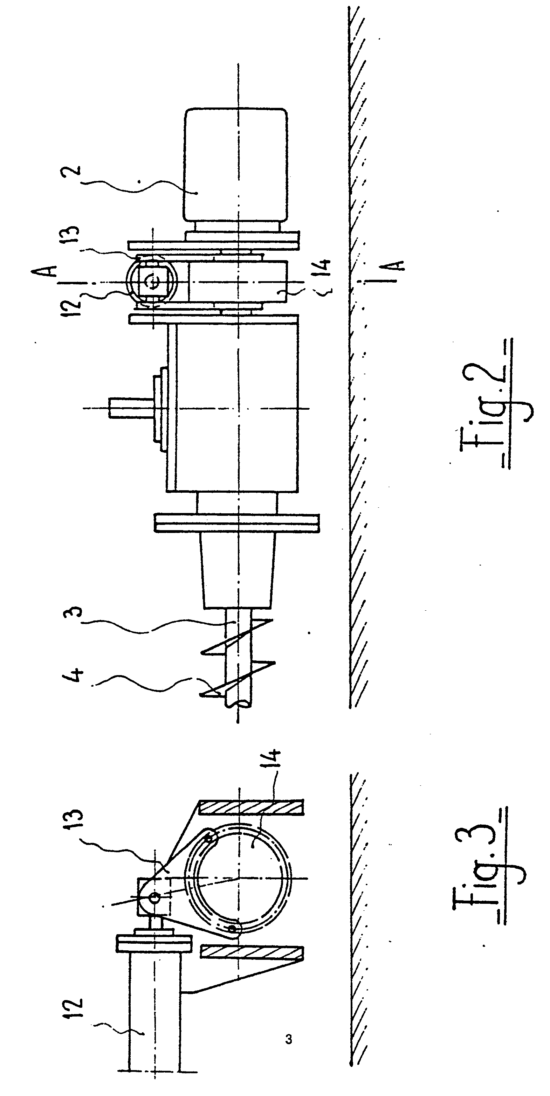

- en figure 1, le schéma hydraulique de l'ensemble d'un dispositif d'extraction comprenant un dispositif de démarrage,
- en figure 2, une vue en élévation-coupe partielle du dispositif d'entrainement en rotation de la vis d'extraction sur elle-même assorti d'un dispositif de démarrage,
- en figure 3, une vue en coupe transversale suivant AA de la figure 2, montrant le dispositif de démarrage.

Tel que représenté sur la figure 1, l'ensemble de l'installation hydraulique assurant l'entrainement en rotation de la vis d'extraction comporte un réseau de canalisations alimentant les organes d'entrainement en rotation de la vis sur elle-même et les organs d'entrainement de celle-ci autour de l'axe vertical du silo. C'est ainsi que la pompe 1 refoule vers un moteur hydraulique 2 accouplé à l'arbre 3 dont l'extrémité porte la vis d'extraction 4: l'énergie résiduelle issue du moteur hydraulique alimente à travers un dispositif de réglage du débit 5, un jeu de vérins hydrauliques à double effet 6 par l'intermédiaire d'un distributeur 7 à commande mécanique lié aux déplacements de la tige des vérins. Ces derniers assurent un mouvement séquentiel de balayage radial de la vis au-dessus du fond du silo. Sur le circuit d'alimentation 8 du moteur hydraulique 2 est connecté un réseau de canalisations de commande du dispositif de démarrage, objet de l'invention. L'accumulation sur la vis d'extraction du produit contenu dans le silo en période d'arrêt provoque un accroissement de l'inertie de démarrage du dispositif: il s'en suit à la mise en route de l'installation, une élévation de pression dans la canalisation 8, et par suite dans l'ensemble du réseau de canalisations de commande du dispositif de démarrage, lecuel se compose d'une arrivée 9 du fluide à un distributeur 10 piloté hydrauliquement, le débit du dit fluide étant ajusté en amont de celui-ci grâce à un diviseur de débit 11. Le distributeur 10 est en communication avec l'une et l'autre des capacités d'un vérin à double effet 12 dont la tige est en liaison avec une chape 13 dont les branches agissent sur un dispositif tel qu'une roue à rochet ou une roue libre 14 calée sur l'arbre 3 portant la vis d'extraction 4. Sur chaque tronçon de tuyouterie 15 ou 16 climentant le vérin 12 est monté un limiteur de pression réglable 17 et 18 mettant en cas de surpression l'un ou l'autre de ces tronçons en décharge vers l'un ou l'autre des clapets tares 19 et 20 annexés au distributeur 10 et pilotant ce dernier de façon à diriger alternativement le fluide moteur vers l'une au l'autre face du piston du vérin 12, les déplacements linéaires alternatifs duquel impriment à l'aide de la roue libre 14 un mouvement de rotation angulaire séquentiel de la vis sur elle-même. Cette rotation de la vis dans la masse du produit provoque immédiatement un abcissement du couple résistant et une diminution de la pression hydraulique dans le réseau de canalisations. Dès que la pression de régime correspondant au couple de fonctionnement normal est atteinte, les clapets 19 et 20 commandent l'arrêt du vérin 12, l'entrainement en rotation de la vis sur elle-même étant alors aussitôt pris en charge par le seul moteur hydraulique 2 alimenté par la pompe 1. La durée d'intervention du vérin 12 n'excède pratiquement pas le temps de rotation de deux tours de la vis.

Le dispositif, objet de l'invention, peut être utilisé pour le démarrage de tous dispositifs d'extraction à vis à commande hydraulique de produits pulvérulents ou granuleux contenus dans des cellules de stockage.

## Revendications

1.- Dispositif adaptable aux appareils d'extraction à vis à commande hydraulique équipant les cellules de stockage à fond plat de produits pulvérulents au granuleux comportant une vis d'extraction (4) entrainée en rotation sur elle-même et autour d'un axe vertical, caractérisé par le fait qu'il comporte des moyens annexés à l'installation hydraulique (8) de l'appareil d'extraction permettant à l'aide d'une pression relativement basse, d'obtenir au démarrage un couple important de rotation de la vis (4) sur elle-même nécessaire pour vaincre le couple résistant provoqué par l'accumulation du produit sur la vis en période de non utilisation, lesquels moyens consistent en un vérin hydraulique (12) à double effet dont le mouvement alterné transmet à l'arbre d'entrainement (3) de la vis par l'intermédiaire d'une roue à cliquet (13, 14) ou d'une roue libre calée sur cet arbre un mouvement de rotation séquentiel, lequel vérin (12) cesse d'agir sur la vis dès que le couple de fonctionnement normal est atteint, l'entrainement en rotation de la vis étant alors assuré par le seul moteur hydraulique (2) de l'appareil d'extraction.

2.- Dispositif selon la revendication 1, caractérisé par le fait que l'alimentation en fluide hydraulique du vérin (12) de démarrage est commandée par au moins un clapet taré (19, 20) monté sur le réseau (8, 9) de canalisations reliant la pompe hydraulique (1) au moteur hydraulique (2) d'entrainement de la vis (4) sur elle-même, lequel clapet réagit à l'élévation de pression dans le dit réseau due à l'accroissement du couple résistant au démarrage pour canaliser le fluide hydraulique vers le vérin (12) à travers un distributeur (10) commandant le mouvement-alterné du vérin.

3.- Dispositif selon la revendication 1, caractérisé par le fait que l'alimentation en fluide hydraulique du vérin (12) de démarrage est commandée par un jeu de deux clapets tarés (19, 20) pilotant un distributeur (10) monté sur le réseau (8, 9) de canalisations reliant la pompe hydraulique au vérin sous l'action de deux limiteurs de pression (17, 18) montés sur chaque canalisation d'alimentation (15, 16) du vérin, lesquels limiteurs de pression réagissent à l'élévation de pression dans le réseau (8) reliant la pompe hydraulique au moteur hydraulique d'entrainement de la vis sur elle-même, lequel distributeur dirige alternativement le fluide moteur vers l'une ou l'autre des faces du piston du vérin.

**Patentansprüche**

1. Vorrichtung, die an Austragsschneckenapparate mit hydraulischer Steuerung anbringbar ist, welche in Behältern mit flachem Boden für Schütt- oder Korngut angeordnet sind und welche eine Austragsschnecke aufweisen, die um sich selbst und um eine vertikale Achse in Drehung versetzt wird,
   dadurch gekennzeichnet,
daß sie an das Hydraulikleitungsnetz (8) des Austragsapparats angeschlossene Mittel umfaßt, die beim Start mittels eines verhältnismäßig niedrigen Drucks ein bedeutendes Drehmoment in Drehrichtung der Schnecke (4) um sich selbst entstehen lassen, um das hemmende Moment zu überwinden, welches durch Anhäufung des Guts auf der Schnecke zur Zeit der Nicht-Benutzung hervorgerufen wird, daß die Mittel aus einem zweiseitig wirkenden Hydraulikzylinder (12) bestehen, dessen hin- und hergehende Bewegung auf die Antriebswelle (3) der Schnecke über ein Klinkenrad (13, 14) oder über einen Freilauf eine sequentielle Drehbewegung überträgt, wobei die Einwirkung des Hydraulikzylinders (12) auf die Schnecke aufhört, sobald das normale Betriebsmoment erreicht ist, bei dem der Drehantrieb der Schnecke dann durch den einzigen Hydraulikmotor (2) des Austragsapparats gewährleistet ist.

2. Vorrichtung nach Anspruch 1,
   dadurch gekennzeichnet,
daß die Einspeisung des Hydraulikfluid des Starthydraulikzylinders (12) durch wenigstens ein voreingestelltes Ventil (19, 20) gesteuert wird, welches in dem Leitungsnetz (8, 9) angeordnet ist, das die Hydraulikpumpe (1) mit dem Hydraulikmotor (2) zum Antrieb der Schnecke um sich selbst verbindet, daß das voreingestellte Ventil (19, 20) auf eine Druckerhöhung in dem Leitungsnetz aufgrund des Anstiegs des hemmenden Moments beim Start anspricht, um das Hydraulikfluid zu dem Hydraulikzylinder (12) durch einen Verteiler (10) zu leiten, der die abwechselnde Bewegung des Hydraulikzylinders (12) steuert.

3. Vorrichtung nach Anspruch 1,
   dadurch gekennzeichnet,
daß die Einspeisung des Hydraulikfluid des Startzylinders (12) durch einen Satz von zwei voreingestellten Ventilen (19, 20) erfolgt, die einen Verteiler (10) betätigen, welcher in dem Leitungsnetz (8, 9) angeordnet ist, das die Hydraulikpumpe (1) mit dem Hydraulikzylinder unter der Einwirkung von zwei Druckbegrenzern (17, 18) verbindet, welche in jeder Speiseleitung (15, 16) des Hydraulikzylinders angeordnet sind und auf die Druckerhöhung in dem Leitungsnetz (8) ansprechen, welches die Hydraulikpumpe mit dem Hydraulikmotor zum Antrieb, der Schnecke um sich selbst verbindet, und daß der Verteiler das Motorfluid abwechselnd zu der einen oder der anderen Seite des Kolbens des Hydraulikzylinders leitet.

**Claims**

1. Device which can be adapted to hydraulically controlled screw extractor machines fitted to flat-bottomed storage cells for pulverulent or granular products comprising an extraction screw (4) driven in rotation about itself and about a vertical axis, characterized in that it comprises means joined to the hydraulic system (8) of the extraction machine making it possible, by means of a relatively low pressure, to obtain, when starting up, a high rotational torque of the screw (4) about itself, required to overcome the resisting torque caused by accumulation of the product on the screw when not in use, which means consist of a double-acting hydraulic ram (12) whose alternating motion imparts a sequential rotary motion to the shaft (3) driving the screw by means of a ratchet wheel (13, 14) or of a free wheel fixed to this shaft, which ram (12) ceases to act on the screw as soon as the normal operating torque is reached, the rotational drive of the screw being then provided solely by the hydraulic motor (2) of the extraction machine.

2. Device according to Claim 1, characterized in that the supply of hydraulic fluid to the starting ram (12) is controlled by at least one calibrated valve (19, 20) fitted in the pipework system (8, 9) connecting the hydraulic pump (1) to the hydraulic motor (2) for driving the screw (4) about itself, which valve reacts to the pressure increase in the said system caused by the increase in the starting resistance torque to channel the hydraulic fluid towards the ram (12) through a distributor (10) controlling the alternating motion of the ram.

3. Device according to Claim 1, characterized in that the supply of hydraulic fluid to the starting ram (12) is controlled by a set of two calibrated valves (19, 20) controlling a distributor (10) fitted in the pipework system (8, 9) connecting the hydraulic pump to the ram under the action of two pressure restrictors (17, 18) fitted in each ram supply pipework (15, 16) which pressure restrictors react to the pressure increase in the system (8) connecting the hydraulic pump to the hydraulic motor for driving the screw about itself, which distributor directs the driving fluid alternately towards one or other of the faces of the ram plunger.

Fig.1

12　13

4　3

A

12　13　2

3

14

14

A

0 088 025

_Fig.3_

_Fig.2_